# EUROPEAN PATENT SPECIFICATION

(11) **EP 1 550 263 B1**
(45) Date of publication and mention of the grant of the patent: **27.08.2008**
(21) Application number: 03770646.2
(22) Date of filing: 07.10.2003
(51) Int. Cl.: H04L 12/26, H04L 29/06, H04L 12/24, G06F 11/273

(54) **System and method for distributed debugging in a communication system**
Vorrichtung und Verfahren zur verteilten Fehlerbesitigung in einem Kommunikationssystem
Système et procédé permettant de diagnostics repartis dans un système de communication

(30) Priority: 10.10.2002 US 269895
(43) Date of publication of application: 06.07.2005
(73) Proprietor: Cisco Technology, Inc., San Jose, CA 95134-1706 (US)
(72) Inventor: ORAN, David, R., Acton, MA 01720 (US); JENNINGS, Cullen, F., Milpitas, CA 95035 (US)
(74) Representative: Kazi, Ilya
(86) International application number: PCT/US2003/031553
(87) International publication number: WO 2004/034638

(56) References cited:
- EP-A- 1 229 449
- US-A1- 2002 116 507
- US-B1- 6 269 330

## Description

### TECHNICAL FIELD

This disclosure relates generally to communication systems, and more particularly to a system and method for distributed diagnostics in a communication system.

### BACKGROUND

Communication systems typically include network elements that perform debugging operations. A network element typically performs debugging operations by logging its activities. A user or another component in the system may then retrieve and analyze the logged activities. By analyzing the activities of a network element, problems with the system may be diagnosed and resolved. However, the task of performing a system diagnostic is often difficult and time consuming. For example, to test the system by setting up a test call, the user often needs to identify which network elements are likely to be involved in handling the test call. The user then typically needs to activate the debugging feature in each of these network elements by sending specific commands to those network elements. This typically forces the user to predict which network elements in the system will handle the test call. After the test, the user typically retrieves the results from each network element, which may represent a time consuming process.

Reference is directed to US2002/0116507 which discloses a system for testing the implementation of a remote access protocol in network servers and/or clients, goes through test cases with different server-client configuration combinations in an automated and distributed process.

### SUMMARY

Aspects of the invention are set out in the independent claims and preferred features of the aspects are set out in the dependent claims.

This disclosure describes a device, system and method for distributed diagnostics in a communication system. A debug message includes information that activates the debugging feature in system components that receive the debug message. The debug message also includes information identifying how and where those system components should communicate the debugging results.

There is also described herein a method for distributed diagnostics in a communication network including generating at least one debug message operable to initiate a debugging function in a plurality of intermediate forwarding network components and comprising a debug address. The debug address identifies a communication type and a target location. The communication type identifies a mechanism used to communicate debugging information collected by the plurality of network components to the target location. The method also includes communicating the debug message along the signalling pathway to at least one of the network components.

A method for distributed diagnostics in a communication network is also described herein, including receiving a message from a network component, identifying the message as a debug message, and identifying communication instructions contained in the debug message. The communication instructions identify how and where to communicate debugging information. The method also includes processing the debug message, collecting the debugging information, and communicating the debugging information in accordance with the communication instructions contained in the debug message.

One or more technical advantages may be provided by the systems and methods described herein. Particular systems and methods described may exhibit none, some, or all of the following advantages depending on the implementation. For example a user may initiate a test of a communication system, such as by attempting to set up a test call in the system. A debug message is generated that includes a message header. The header includes an indicator that causes a system component to activate its debugging feature for the test call. A single debug message routed through the communication system could activate the debugging feature in one, several, or many system components. This helps to reduce or eliminate the need for the user to generate specific commands for each system component to be used during the test. This also helps to reduce or eliminate the need for the user to guess ahead of time which system components will handle the test call.

The header also includes information that identifies how and where to communicate the debugging results. For example, the header may include an electronic mail address. After generating the debugging results, each system component involved in the test may generate an electronic mail message containing the results and communicate the message to the identified address. This allows the debugging results from multiple system components to be communicated to a single location, where the information can then be correlated and used to diagnose system problems. This helps to reduce or eliminate the need for the user to access each individual system component to retrieve the debugging results.

Other technical advantages will be readily apparent to one skilled in the art from the following figures, descriptions, and claims.

### BRIEF DESCRIPTION OF THE DRAWINGS

For a more complete understanding of this disclosure and its advantages, reference is now made to the following description, taken in conjunction with the accompanying drawings, in which:
FIGURE 1 is a block diagram illustrating an example communication system for distributed diagnostics;
FIGURE 2 is a block diagram illustrating an example source client for initiating a test in a system;
FIGURE 3 is a block diagram illustrating an example network node for performing debugging operations in a system;
FIGURE 4 is a block diagram illustrating example messages for performing debugging operations in a network node in a system;
FIGURE 5 is a flow diagram illustrating an example method for initiating a test in a system;
FIGURE 6 is a flow diagram illustrating an example method for performing debugging operations in a system; and
FIGURE 7 is a flow diagram illustrating an example method for processing debugging results.

### DETAILED DESCRIPTION OF THE DRAWINGS

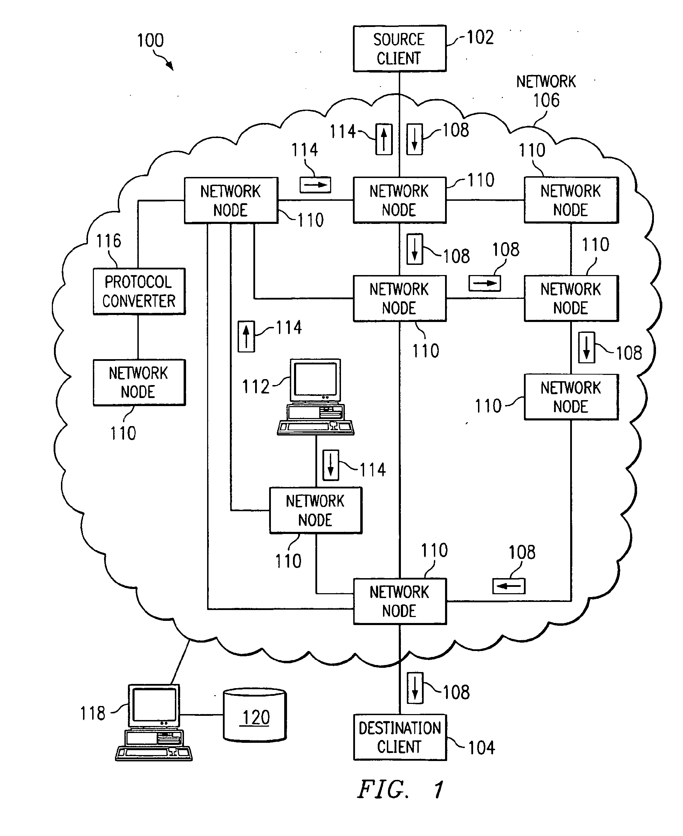

FIGURE 1 is a block diagram illustrating an example communication system 100 for distributed diagnostics. In the illustrated embodiment, system 100 includes a source client 102, a destination client 104, and a network 106. Other embodiments of system 100 may be used without departing from the scope of this disclosure.

In one aspect of operation, a user may initiate a test of system 100, such as by initiating a test call from source client 102 to destination client 104. Source client 102 generates one or more debug messages 108 for the test call. Message 108 contains an indicator that activates the debugging feature in one or more components of system 100, such as in one or more network nodes 110 in network 106 and in destination client 104. Message 108 also includes information identifying how and where to communicate the debugging results. For example, the debugging results could be communicated to an electronic mail address or to a web site accessible by source client 102. Because message 108 may activate the debugging feature in multiple system components, the user initiating the test need not generate specific commands for each system component. The user also does not need to guess ahead of time which system components will receive and process message 108. Further, because message 108 identifies how and where to communicate the debugging results, the user need not access each individual system component to retrieve the results.

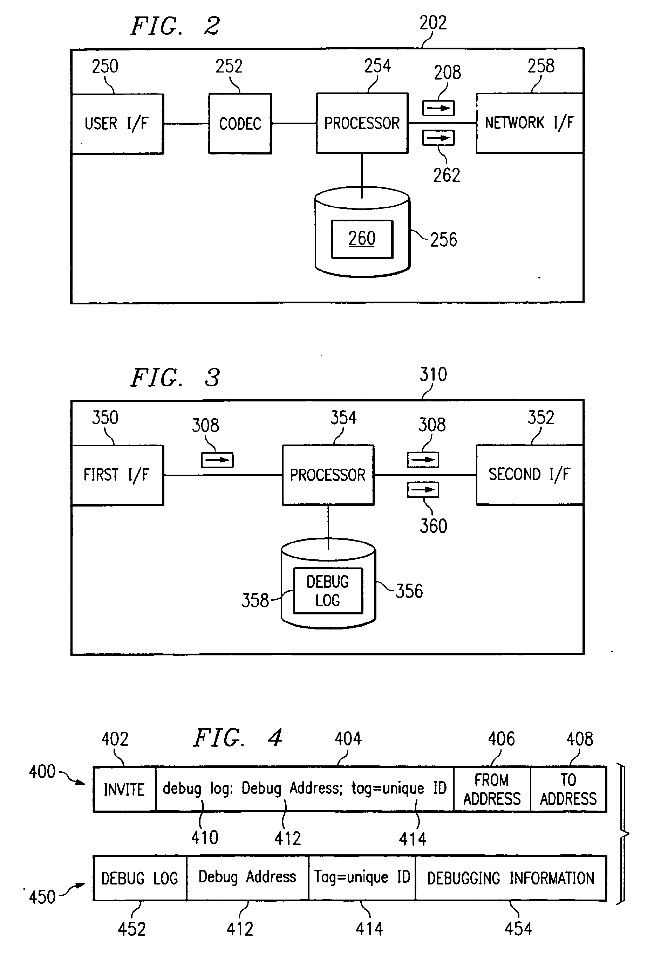

In the illustrated example, source client 102 is coupled to network 106. In this specification, the term "couple" refers to any direct or indirect physical, logical, virtual, or other types of communication between two or more components, whether or not those components are in physical contact with one another. Source client 102 operates to establish communication sessions in system 100. For example, source client 102 could allow a user to place a telephone call to a destination client 104. Source client 102 could also establish a session allowing the user to communicate facsimile, data, or other traffic through system 100. Source client 102 may include any hardware, software, firmware, or combination thereof for providing one or more communication services to a user. In one embodiment, source client 102 represents a voice over packet client, such as a Voice over Internet Protocol (VoIP) client or an International Telecommunication Union - Telecommunications (ITU-T) H.323 client. An example source client is shown in FIGURE 2, which is described below.

Destination client 104 is coupled to network 106. Destination client 104 represents the destination of the voice, facsimile, data, or other traffic communicated from source client 102. Destination client 104 may include any hardware, software, firmware, or combination thereof for receiving one or more types of communication traffic from source client 102. Destination client 104 could, for example, represent a VoIP client, an H.323 client, a fixed or wireless telephone, a facsimile machine, a computing device, or any other communication device.

Network 106 couples source client 102 and destination client 104. Network 106 facilitates communication between components coupled to network 106. For example, network 106 may communicate Internet Protocol (IP) packets, frame relay frames, Asynchronous Transfer Mode (ATM) cells, or other suitable information between network addresses. Network 106 may include one or more local area networks (LANs), metropolitan area networks (MANs), wide area networks (WANs), all or a portion of a global network such as the Internet, or any other communication system or systems at one or more locations.

In the illustrated example, network 106 includes a plurality of network nodes 110. Network nodes 110 may represent routers, hubs, bridges, gateways, proxies, firewalls, switches, remote access devices, or any other communication devices. In particular embodiments, network nodes 110 represent H.323 gatekeepers or Session Initiation Protocol (SIP) proxies. One example of a network node is shown in FIGURE 3, which is described below. Also, testing station 112 may be used to invoke the generation of message 108 by source client 102. Testing station 112 could further be used as a receiving point to collect the debugging information that is collected by the components of system 100. A collecting station 118 coupled to a database 120 could also be used to receive, collect, and store the debugging information communicated by the components of system 100. Testing station 112 and collecting station 118 could each represent any suitable computing device.

In one aspect of operation, a test of the signaling environment of system 100 can be performed. For example, a user or a component in system 100 may initiate an attempt to establish a test call between source client 102 and destination client 104 through one or more network nodes 110. The test could be initiated locally by a user at source client 102, remotely by a user at testing station 112, or in any other suitable manner. In this specification, the test of system 100 may be described as involving one or more signaling messages that initiate a test call in system 100. Other types of messages, such as messages produced during a call or messages generated to terminate a call, may be used to initiate the test. Also, the following describes the two-party call example where the test is initiated locally by a user at source client 102.

In response to the initiation of the test, source client 102 may generate one or more debug messages 108. A. debug message represents a message containing any suitable header, indicator, or other information that can invoke a debugging function in one or more components in system 100. A debug message could represent a stand-alone message, or debug message could represent, accompany, append, be a part of, or otherwise be associated with an existing signaling message. In one embodiment, debug message 108 initiates a test call in system 100 and represents a signaling message that causes a connection to be established (if possible) between source client 102 and destination client 104. In particular embodiments, message 108 could represent, accompany, append, be a part of, or otherwise be associated with a SIP INVITE message or H.323 SETUP and Admission Request (ARQ) messages. In other embodiments, debug message 108 could represent, accompany, append, be a part of, or otherwise be associated with other messages, such as SIP UPDATE, RE-INVITE, INFO, MESSAGE, SUBSCRIBE, NOTIFY, or BYE messages, an H.323 User Input Indication (UII) message, a Bearer Independent Call Control (BICC) Initial Address Message (IAM), a BICC Addres Progress Message (APM), or a BICC Address Complete Message (ACM).

In one embodiment, message 108 includes an indicator that activates the debugging function in system components that receive message 108. Message 108 may also include a debug address. A "debug address" represents a target location or address where the debugging results are to be delivered and the mechanism by which the results are to be delivered. For example, the debug address could indicate that the results are to be mailed to an electronic mail address, streamed to a syslog destination, appended to a file transfer protocol (FTP) location, or posted to a Hypertext Transfer Protocol (HTTP) location. In addition, message 108 could include a tag or other identifier. The tag may identify a particular message 108 and differentiate one message 108 from other messages 108 in system 100. Messages that are part of or otherwise associated with the test call could also be assigned a common tag to show that the messages are related. In a particular embodiment, the tag in a message 108 is different from the globally unique call identifier typically assigned to each call in system 100. This may help to identify certain problems in system 100, such as when a network node 110 improperly alters the globally unique call identifiers. One example of a debug message is shown in FIGURE 4, which is described below.

After receiving the instruction to initiate the test, source client 102 may also activate its own debugging function and log its activities. Source client 102 may generate debug message 108 and communicate message 108 to network 106. The collected debugging information may also be communicated to the location identified by the debug address in message 108.

When the first network node 110 receives message 108, the contents of message 108 cause the first network node 110 to activate its debugging functionality. The first network node 110 then begins logging its activities related to processing the message 108. In one embodiment, the first network node 110 prepares to perform a function related to the test call, such as establishing or terminating the test call. The first network node 110 may also forward the same debug message 108 or a different debug message 108 to a second network node 110 along a path between source client 102 and destination client 104. The first network node 110 could also generate an error if it cannot perform the activities requested by message 108. When the debugging information has been collected, the first network node 110 communicates the information to the location identified by the debug address in message 108. For example, node 110 could generate an electronic mail message and mail the message to an address. Node 110 could also generate a web page and perform an HTTP post to the specified location. In this way, debugging information may be delivered in a user-specified manner to a user-specified location.

The second network node 110 may receive message 108, activate its debugging functionality, and forward the same message 108 or a different message 108 to the third node 110 in the path. The second network node 110 also logs its activities and sends its debugging results to the specified location. As message 108 traverses network 106, each node 110 or "hop" in the path through network 106 may receive debug message 108, activate its debugging function, and communicate its debugging results to the specified location. There may be multiple possible paths through network 106 from source client 102 to destination client 104, and message 108 may traverse any suitable path through network 106. If and when message 108 reaches destination client 104, destination client 104 could also generate debugging information and communicate the information to the specified location. The debugging information may include any suitable information collected by a component of system 100. For example, the debugging information may include a copy of the message 108 and signaling information used to set up, terminate, or otherwise manage the test call in system 100.

When the components of system 100 communicate the debugging information to the location specified by message 108, each component may include the tag from message 108. In this embodiment, multiple components of system 100 can communicate collected debugging information, and the same tag can be included with each communication. This allows a computing or other device to receive the communications and correlate communications having a common tag. The combined debugging information can then be used to diagnose problems in the signaling path of message 108. The use of the tag to correlate debugging information may also be useful when multiple test calls are established in system 100 and the debugging information associated with the test calls is sent to the same debug address. The tag allows debugging information associated with one test call to be distinguished from the debugging information associated with other test calls.

The test of system 100 could also be initiated by a third party, such as by a user at testing station 112. In one embodiment, the test can be initiated by generating a remote invocation message 114 and communicating the message 114 to source client 102 over network 106. Message 114 may represent any suitable command to remotely initiate a test at source client 102. Message 114 may, for example, represent a SIP REFER message or an H.323 or BICC TRANSFER message. Source client 102 and network 106 may then operate as described above, where debug message 108 causes each system component that receives message 108 to log and communicate the debugging information to a location specified in message 108. In addition, message 114 may also include information that activates the debugging feature in components that receive message 114. As a result, the behavior of network nodes 110 and source client 102 in handling message 114 can also be monitored.

Network 106 could also include a protocol converter 116. Protocol converter 116 represents a signaling protocol translator that can convert from one protocol to another protocol. This may allow, for example, network nodes 110 that use different signaling protocols to operate in or communicate with network 106. In one embodiment, both protocols used by protocol converter 116 could allow a user to control the debugging capabilities of network nodes 110. In this embodiment, even if debug message 108 travels through one or multiple protocol converters 116, message 108 can activate the debugging capabilities in system components operating in the different protocol environments.

In addition, a network node 110 could invoke the execution of ancillary services related to a test call. Ancillary services could include Local Number Portability (LNP), Lightweight Directory Access Protocol (LDAP), Transactional Capabilities Application Port (TCAP), or Authorization, Authentication, and Accounting (AAA) services. Ancillary services could also include the Internet Engineering Task Force (IETF) ENUM capabilities for telephone number mapping, Signaling System 7 (SS7) functions, or Domain Name System (DNS) functions. In one embodiment, the protocols used with the ancillary services may include or be augmented to support the debug capability described above. In this embodiment, when a network node 110 invokes an ancillary service related to the test call, the debug logs can include information collected as the ancillary service is invoked and performed. So, the debugging information may also include information identifying the invocation of an ancillary service during the processing of message 108 and information collected during the performance of the ancillary service. This helps to provide additional debug information, which may be used to diagnose problems in system 100. This also helps to keep track of which services are invoked as a side effect of the test.

Although FIGURE 1 illustrates one example of a system 100 for distributed diagnostics, various changes may be made to system 100. For example, while FIGURE 1 illustrates two clients 102, 104, system 100 could include any suitable number of clients. Also, the arrangement and composition of network 106 is for illustration only. Networks having other configurations and different components could also be used. Further, the paths shown for messages 108, 114 through network 106 represent only examples of the many paths that could be traversed by messages 108, 114. Beyond that, other networks could be coupled to network 106, and the additional networks could also be operable to trace the test call and collect debugging information. In addition, debug message 108 could originate at other locations in system 100, such as at a network node 110 in network 106.

FIGURE 2 is a block diagram illustrating an example source client 202 for initiating a test in a system. Source client 202 may, for example, be useful as source client 102 in system 100 of FIGURE 1. In the illustrated example, source client 202 includes a user interface 250, a codec 252, a processor 254, a memory 256, and a network interface 258. The source client 202 in FIGURE 2 has been simplified for ease of illustration and explanation, and source client 202 is described as providing voice services to a user. Other embodiments of source client 202 may be used to provide other services to a user.

User interface 250 facilitates the transmission and reception of information to and from a user. For example, user interface 250 could receive analog voice information from the user and forward the information to codec 252 for processing. User interface 250 could also receive information from codec 252 and communicate the information to the user. User interface 250 may include any hardware, software, firmware, or combination thereof for facilitating the exchange of information with a user. For example, user interface 250 could represent a subscriber line interface card (SLIC) coupled to the internal telephone lines in a business or residence. User interface 250 could also represent an interface coupled to a telephone, speaker, microphone, or other device that provides analog voice services to the user.

Codec 252 is coupled to user interface 250 and processor 254. Codec 252 converts analog information into digital information and digital information into analog information. For example, codec 252 may receive an analog voice signal from user interface 250, such as a voice signal from a telephone coupled to user interface 250. Codec 252 digitizes the analog signal and creates a digital bit stream, which can be processed by processor 254. Codec 252 also receives digital signals from processor 254, converts the digital signals to analog signals, and communicates the analog signals to user interface 250. Codec 252 may include any hardware, software, firmware, or combination thereof for converting information between analog and digital formats.

Processor 254 is coupled to codec 252 and network interface 258. Processor 254 may perform a variety of functions in source client 202. For example, processor 254 may receive from codec 252 a digital bit stream representing the voice of a party to a call, sample the bit stream, place the samples in IP packets, cells, frames, or other datagrams, and communicate the samples over interface 258. Processor 254 may also receive over interface 258 datagrams containing digital information representing the voice of another party to the call, extract the information, and communicate the information to codec 252. Beyond that, processor 254 may receive signaling information, such as in-band signaling information received by codec 252 or through a separate control channel. Processor 254 may further generate unique identifiers cal various communication sessions, such as telephone calls, established by source client 202. Beyond that, processor 254 may receive an indication that a test call is desired in system 100, such as by receiving a command from a user of source client 202 or from a remote location, and generate one or more debug messages 208. As a particular example, processor 254 may generate one or more debug messages 208 containing a debug header, which includes an indication that debugging information should be collected and sent to a debug address. In addition, processor 254 may collect and log debug information representing the activities of source client 202. Processor 254 may then generate a message 262 containing some or all of the collected debugging information. Processor 254 could include any suitable processing device or devices for generating messages 208. Processor 254 could, for example, represent a digital signal processor (DSP). Although FIGURE 2 illustrates a single processor 254 in source client 202, multiple processors 254 may be used according to particular needs.

Memory 256 stores and facilitates retrieval of information used by processor 254 to perform the functions of source client 202. Memory 256 may, for example, store instructions executed by processor 254 and data used by processor 254 to generate messages 208. As a particular example, memory 256 could store a debug log 260. Debug log 260 contains the information collected by processor 254 when a debug feature is activated in source client 202. At an appropriate time, processor 254 may access debug log 260, retrieve the debug information contained in log 260, format the debug information, and communicate the debug information to a location specified in a message 208. Memory 256 may include any hardware, software, firmware, or combination thereof for storing and facilitating retrieval of information. Memory 256 may also use any of a variety of data structures, arrangements, or compilations to store and facilitate retrieval of the information. Although FIGURE 2 illustrates memory 256 residing in source client 202, memory 256 may reside at any location or locations accessible by source client 202.

Network interface 258 is coupled to processor 256. Network interface 258 facilitates communication between source client 202 and a network, such as network 106. Network interface 258 may, for example, receive incoming signals from the network 106 and forward the signals to processor 254. Network interface 258 could also receive information from processor 254, such as a debug message 208, and communicate the information to network 106. Network interface 258 may include any hardware, software, firmware, or combination thereof for communicating with a network. For example, network interface 258 could represent an Asynchronous Digital Subscriber Line (ADSL) interface, a cable modem interface, an Ethernet interface, or other suitable interface.

The messages 208 generated by source client 202 may be used to activate the debug capabilities of various network nodes 110 in network 106 and destination client 104. The activation of the debug capabilities in these components may occur on a per-call basis. In other words, the debug capabilities of the components may be activated each time a particular debug message having the debug header is received. This simplifies the activation of the debugging features in the components of system 100. The messages 208 also include a debug address, which specifies how and where the debug information is to be delivered. This allows multiple system components to generate and send debug information to a location where the information can be correlated and analyzed.

Although FIGURE 2 illustrates one example of a source client 202, various changes may be made to source client 202. For example, the embodiment of source client 202 shown in FIGURE 2 is for illustration only, and other embodiments of source client 202 could be used. Also, source client 202 is described as supporting voice services. Other clients, such as personal computers, IP telephones, and personal digital assistants, may be used to provide facsimile, data, presence and instant messaging, or other services. Further, a similar apparatus could be used as destination client 104 in system 100. In addition, while source client 202 has been described as establishing a test call in response to receiving debug message 208, source client 202 could perform other actions. As a particular example, source client 202 could terminate a previously-established test call in response to receiving debug message 208.

FIGURE 3 is a block diagram illustrating an example network node 310 for performing debugging operations in a system. Network node 310 may, for example, be useful as network node 110 in system 100 of FIGURE 1. In the illustrated embodiment, node 310 includes a first interface 350, a second interface 352, a processor 354, and a memory 356. The network node 310 in FIGURE 3 has been simplified for ease of illustration and explanation, and network node 310 is described as providing voice services to a source client. Other embodiments of network node 310 may be used to provide other services to a client. Also, network node 310 represents a SIP proxy in network 106 of system 100. Other nodes in network 106 could represent routers, hubs, bridges, gateways, firewalls, switches, remote access devices, or any other communication devices.

First interface 350 facilitates communication with a component of system 100, such as source client 202 or another network node 310. First interface 350 may use any suitable protocol or mechanism for communicating with the source client or other component. For example, first interface 350 could represent a DSL or cable modem interface operable to communicate with source client 202. First interface 350 may include any hardware, software, firmware, or combination thereof for communicating with one or more source clients or other components of system 100.

Second interface 352 facilitates communication with another component of system 100, such as destination client 104 or another network node 310. For example, second interface 352 may receive one or more debug message 308 from processor 354 for setting up a test call in network 106, and second interface 352 may communicate the message 308 to another network node 310 in network 106. Second interface 352 may include, any hardware, software, firmware, or combination thereof for communicating with one or more network nodes or other components of system 100.

Processor 354 is coupled to first interface 350, second interface 352, and memory 356. Processor 354 controls the behavior and function of node 310. For example, processor 354 may receive one or more messages from a source client or other network node 310. If the message is a debug message 308, processor 354 activates the debugging feature of network node 310. During the debugging, processor 354 monitors and logs the activities performed to implement the function requested by message 308. Processor 354 may then generate a message 360 containing some or all of the collected debugging information. Processor 354 could include any suitable processing device or devices for performing debugging operations in network node 310. Processor 354 could, for example, represent one or more DSPs. Although FIGURE 3 illustrates a single processor 354 in network node 310, multiple processors 354 may be used according to particular needs.

Memory 356 stores and facilitates retrieval of information used by processor 354 to perform the functions of network node 310. Memory 356 may, for example, store data used by processor 354 to control node 310. In the illustrated example, memory 356 may store information collected by the debugging functionality of node 310 in a debug log 358. Processor 354 could also access debug log 358 to retrieve and communicate the debugging information to a location identified by message 308. Memory 356 may include any hardware, software, firmware, or combination thereof for storing and facilitating retrieval of information. Memory 356 may also use any of a variety of data structures, arrangements, or compilations to store and facilitate retrieval of the information. Although FIGURE 3 illustrates memory 356 residing in network node 310, memory 356 may reside at any location or locations accessible by node 310.

In one aspect of operation, to test the signaling environment of system 100, a source client or other network node 310 may communicate one or more debug messages 308 to network node 310. The message 308 may include a header that activates the debugging feature of node 310. The message 308 may also include a debug address that identifies the mechanism to be used to report the debugging information to a specified location. In addition, the message 308 may include a tag that differentiates the debug message 308 from other messages 308.

Processor 354 receives the one or more debug messages 308 and determines whether the message 308 includes the debug header. If so, processor 354 activates the debugging function of network node 310 and begins logging information in memory 356. Processor 354 may also process the debug message 308, such as by identifying the next network node 110 to receive the message 308 or modifying the contents of message 308. Processor 354 communicates message 308 to the next network node 110 in network 106 so that the next network node 110 can begin logging debug information. After the debug information is collected, processor 354 uses the debug address contained in message 308 to identify the mechanism to be used to report the debugging information. Processor 354 then places the debug information into the proper format and communicates the debug information to the specified location. For example, processor 354 could generate an electronic mail message, a web page, or a data stream containing the debug information. Processor 354 then communicates the information to the location specified in the message 308, such as by mailing the message, posting the web page, or communicating the data stream.

As part of the debugging functionality, processor 354 logs the invocation of any ancillary services invoked for the test call. Actions performed by network node 310 to provide the ancillary services could also be logged. This may provide additional information that can be used to diagnose the system 100.

Although FIGURE 3 illustrates one example of a network node 310, various changes may be made to node 310. For example, the embodiment of network node 310 shown in FIGURE 3 is for illustration only, and other embodiments of network node 310 could be used. Also, while network node 310 is described as supporting voice services, other network nodes providing facsimile, data, or other services could also be used. In addition, while network node 310 has been described as establishing a test call in response to receiving debug message 308, network node 310 could perform other actions. As a particular example, network node 310 could terminate a previously-established test call in response to receiving debug message 308.

FIGURE 4 is a block diagram illustrating example messages for performing debugging operations in a network node in a system. In particular, a debug message 400 activates the debugging feature of components in a system, and a results message 450 contain the debugging results from a component in the system. Message 400 may, for example, be useful as debug message 108 in system 100 of FIGURE 1.

In the illustrated embodiment, message 400 includes a command 402, a debug header 404, a source address 406, and a destination address 408. Other embodiments of debug message 400 can be used in system 100. Also, while the message 400 in FIGURE 4 may represent, accompany, append, be a part of, or otherwise be associated with the Session Initiation Protocol (SIP), other messages supported by other protocols can be used in system 100.

Command 402 represents the function to be performed by a component of system 100. In this example, command 402 represents an INVITE command used to set up a call through network 106. The call is established between the location identified by source address 406 and the location identified by destination address 408.

Debug header 404 represents a header inserted into debug message 400. Debug header 404 is used to activate the debugging functionality in a network node 110 or other component in system 100. In the illustrated embodiment, debug header 404 includes a debug indicator 410, a debug address 412, and a tag 414. Other embodiments of debug header 404 may also be used.

Debug indicator 410 identifies message 400 as a debug message. When a network node 110 or other component receives message 400, debug indicator 410 causes the component to activate its debugging capabilities. As a result, the component logs its activities related to processing message 400 and any other messages associated with the same tag 414.

Debug address 412 contains communication instructions identifying how a network component should communicate the debugging information collected by the network component. In one embodiment, debug address 412 identifies the location where the debug information should be sent. The location may, for example, represent a Uniform Resource Indicator (URI). Debug address 412 may also identify the mechanism by which the debug information is sent to that location. Example debug addresses 412 could include "mailto: abc@xyz.com," "http: www.abc.com/xyz," "syslog: 10.1.1.226," and "ftp: www.def.com/mno." In these examples, the first portion of the debug address 412 represents the mechanism used to communicate the debug results, and the second portion represents a specified location to which the debug results are to be communicated. Other or additional communication instructions could be used.

Tag 414 represents an identifier associated with the debug message 400. Tag 414 could, for example, represent an alphanumeric string or other suitable identifier. In one embodiment, each debug message 400 has a different tag 414, and tag 414 is included with the debug information communicated to the location identified by debug address 412. This allows the debug information associated with one message 400 to be distinguished from the debug information associated with another message 400. In a particular embodiment, each call in system 100 is associated with a globally unique call identifier. In this embodiment, tag 414 represents a different identifier than the globally unique call identifier associated with the test. In another embodiment, source client 202 could generate multiple messages associated with a test call. In this embodiment, the messages may have a common tag 414, allowing the other components of system 100 to identify the messages as related. Components of system 100, such as source client 102, may use any suitable method to generate tag 414. For example, source client 102 could generate tag 414 using a random or pseudo-random number generator, the Medium Access Control (MAC) address associated with source client 102, and/or any other suitable information.

In the illustrated embodiment, results message 450 includes a message type 452, the debug address 412, the tag 414, and debugging information 454. Other embodiments of results message 450 can be used in system 100. Message type 452 identifies the message 450 as containing debugging results from a component of system 100. Any suitable type of identifier can be used to identify message 450. Debugging information 454 represents the information collected by a component of system 100 after debug message 400 activates the debugging capabilities of the network component. Debugging information 450 may, for example, include a copy of message 400, signaling information used to set up the test call in system 100, and information associated with any ancillary services invoked during the processing of message 400.

The debug address 412 in message 450 identifies the target location for message 450. Collecting station 118 may reside at that target location or have the ability to directly or indirectly access the target location. Collecting station 118 may retrieve multiple results messages 450 and identify the tags 414 contained in messages 450. Collecting station 118 may also correlate results messages 450 that share a common tag 414. For example, collecting station 118 could extract the debugging information 454 from the results messages 450 having a common tag 414 and consolidate the debugging information 454 into a single file or other data structure. Collecting station 118 or other component could then analyze the correlated information to identify problems in system 100.

Although FIGURE 4 illustrates one example of messages 400, 450 for performing debugging operations in a network node in system 100, various changes may be made to messages 400, 450. For example, messages 400, 450 may include any other or additional information. Also, while message 400 is illustrated as a SIP INVITE message, other messages could be used. In addition, FIGURE 4 illustrates one example of a results message 450. Other types of messages and mechanisms can be used to communicate the debugging results, including electronic mail messages, web pages, and data streams.

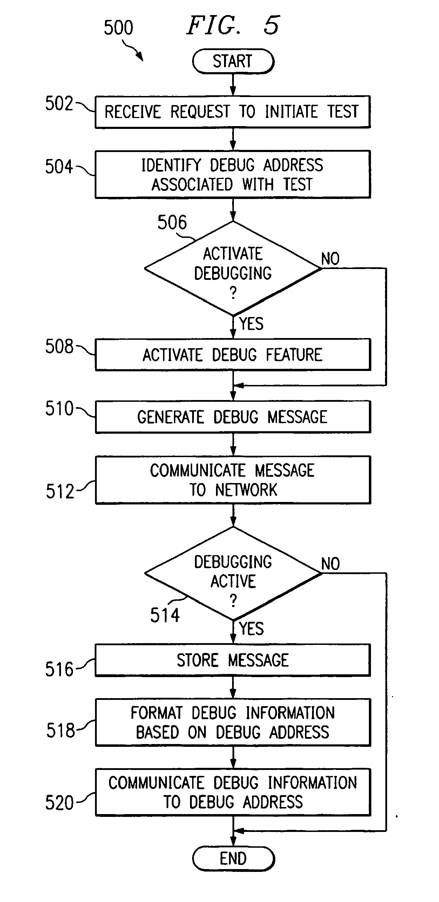

FIGURE 5 is a flow diagram illustrating an example method 500 for initiating a test in the system 100. While method 500 may be described with respect to source client 202 of FIGURE 2 operating in system 100 of FIGURE 1, method 500 can be used in other suitable devices operating in other systems.

Source client 202 receives a request to initiate a diagnostic or other type of test at step 502. This may include, for example, a user at source client 202 locally entering a command to initiate a test. This may also include a user at testing station 112 remotely invoking the test using a SIP REFER message or other suitable message 114.

Source client 202 identifies a debug address associated with the test at step 504. This may include, for example, processor 254 identifying the debug address included with the local command or message 114. This could also include processor 254 using information stored in memory 256 identifying a default debug address to be used.

Source client 202 determines whether the debug feature in source client 202 should be activated at step 506. This may include, for example, processor 254 determining whether the request received at step 502 includes an indication that the debug feature in source client 202 should be activated. This may also include processor 254 determining whether to activate the debug feature based on the type of request received at step 502. As a particular example, processor 254 could always activate the debug feature when a remote request, such as a request 114 from a testing station 112, is received at step 502. If the debug feature is needed, source client 202 activates the debug feature at step 508. This may include, for example, processor 254 beginning to store all activities associated with the test in debug log 260.

Source client 202 generates one or more debug messages at step 510. This may include, for example, processor 254 generating a debug message 208 having the format shown in FIGURE 4 or other suitable message containing debug header 404. Source client 202 communicates the debug message to network 106 at step 512. This may include, for example, processor 254 communicating the message 208 to a network node 110 using network interface 258.

Source client 202 determines whether the debug feature in active at step 514. This may include, for example, processor 254 determining whether the debug feature was previously activated at step 508. If active, source client 202 stores the debug message at step 516. This may include, for example, processor 254 storing the message 208 in memory 256, such as in debug log 260. Source client 202 formats the collected debug information using the debug address at step 518. This may include, for example, processor 254 retrieving the contents of debug log 260 from memory 256. This may also include processor 254 placing the debug information into a format suitable for communication using the mechanism identified in the debug header 404 of message 208. For example, processor 254 could generate an electronic mail message, a web page, or a data stream containing the debug information. As a particular example, processor 254 could generate a message 262 having the format shown in FIGURE 4. Source client 202 communicates the debug information to the location identified by the debug address at step 520. This may include, for example, processor 254 mailing the mail message, posting the web page, or sending the data stream to the location identified by the debug address.

Although FIGURE 5 illustrates an example method 500 for initiating a test in system 100, various changes may be made to method 500. For example, source client 202 could activate the debug feature before identifying the debug address. Also, source client 202 need not store the debug message as part of the debugging operations. In addition, source client 202 could be designed to always or never perform debugging operations as part of the initiated test. This may be useful, for example, when it is known that source client 202 operates properly.

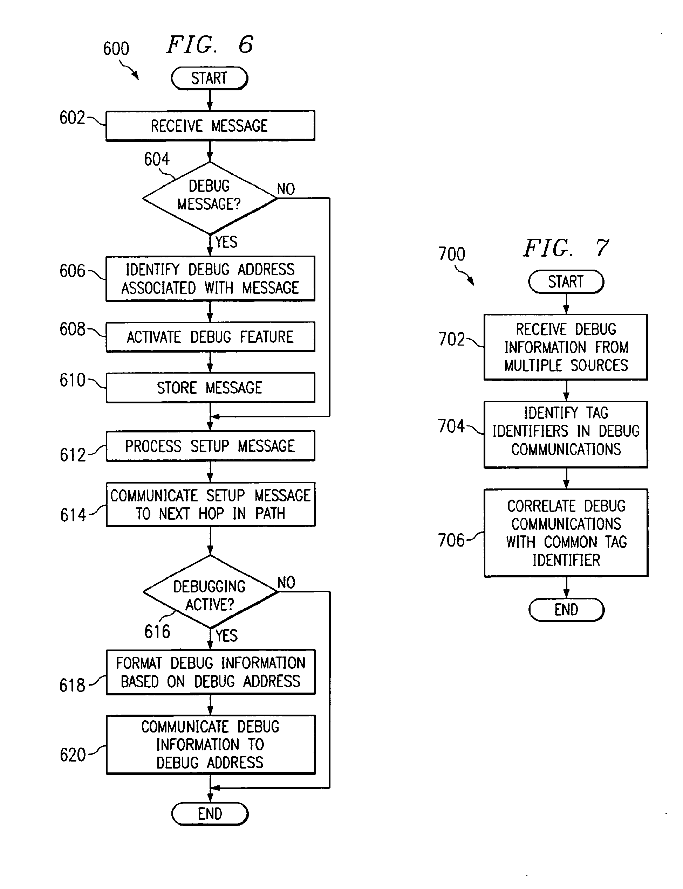

FIGURE 6 is a flow diagram illustrating an example method 600 for performing debugging operations in a system. While method 600 may be described with respect to network node 310 of FIGURE 3 operating in system 100 of FIGURE 1, method 600 can be used in other suitable computing devices operating in other systems.

Network node 310 receives a message at step 602. This may include, for example, processor 354 receiving a message through interface 350. Network node 310 determines whether the message is a debug message at step 604. This may include, for example, processor 354 determining whether the message includes a debug header 404. If so, network node 310 identifies a debug address associated with the message at step 606. This may include, for example, processor 354 examining the debug message and extracting the debug address 412 in debug header 404. Network node 310 activates its debug feature at step 608. This may include, for example, processor 354 beginning to store all activities associated with the debug message in debug log 358. Network node 310 stores the debug message at step 610. This may include, for example, processor 354 storing the message in memory 356, such as in debug log 358.

Network node 310 processes the debug message at step 612. This may include, for example, processor 354 performing any activities needed to set up, terminate, or otherwise manage a test call at node 310 in network 106. As particular examples, processor 354 could identify the destination client 104 associated with the test call. Processor 354 could also determine the path to be used to reach the destination client 104, including which network node 110 (if any) should be used as the next hop. This may further include processor 354 generating a new debug message, modifying the current debug message, or continuing to use the same debug message received at step 602. Network node 310 communicates the debug message to the next hop in the path toward the destination client 104 at step 614. This may include, for example, processor 354 communicating the debug message to the next node 110 through interface 352.

Network node 310 determines whether the debug feature in active at step 616. This may include, for example, processor 354 determining whether the debug feature was previously activated at step 608. If active, network node 310 formats any collected debug information using the debug address at step 618. This may include, for example, processor 354 identifying the format for the debug information specified by the debug message and placing the debug information in that format, along with the tag 414 from the debug message. Network node 310 communicates the debug information to the location identified by the debug address 412 at step 620. This may include, for example, processor 354 mailing, posting, appending, or streaming the debug information to the location identified by the debug address.

Although FIGURE 6 illustrates an example method 600 for performing debugging operations in system 100, various changes may be made to method 600. For example, network node 310 could activate the debug feature before identifying the debug address. Also, network node 310 need not store the debug message as part of the debugging operations. In addition, a similar method can be used at destination client 104. Destination client 104 may process the debug message in other ways, such as by establishing a connection, and need not communicate the debug message to the next hop in the path at step 614.

FIGURE 7 is a flow diagram illustrating an example method 700 for processing debugging results. While method 700 may be described with respect to system 100 of FIGURE 1, method 700 could be used in other suitable systems. Also, method 700 is described with respect to collecting station 118 receiving and processing the debug results. Other devices or systems could also be used to process the results.

Collecting station 118 receives debug information from multiple sources at step 702. This may include, for example, collecting station 118 receiving electronic mail messages from system components, or a browser at collecting station 118 viewing a web page created by a system component. This could also include collecting station 118 receiving the debug information as a stream stored in a syslog destination or by being appended to an FTP file. The debug information may be associated with the same test call or with different test calls. The debug information may come from source client 102, network nodes 110, destination client 104, or other components in system 100. The debug information could also contain information regarding any ancillary services used during the test call.

Collecting station 118 identifies tag identifiers associated with the various debug communications at step 704. This may include, for example, collecting station 118 identifying a tag 414 associated with each communication received from a system component. Collecting station 118 correlates the debug communications at step 706. This may include, for example, collecting station 118 combining debug communications having a common tag 414 into a consolidated file or other data structure. At this point, the consolidated debug file may represent all debug information collected and associated with a test call. The consolidated debug information can then be analyzed to identify existing or potential problems in system 100. In particular, the information can be analyzed to detect problems in the signaling environment of system 100.

While this disclosure has been described in terms of certain embodiments and generally associated methods, alterations and permutations of the embodiments and methods will be apparent to those skilled in the art. Accordingly, the above description of example embodiments does not define or constrain this disclosure. Other changes, substitutions, and alterations are also possible without departing from the scope of this disclosure, as defined by the following claims.

## Claims

1. A method for distributed debugging in a communication network (106), comprising:
generating at least one debug message (108) operable to initiate a debugging function in a plurality of intermediate forwarding network components (110) along a signaling pathway for a test call between a source and a destination client, the debugging function operable to perform an operation specified by the debug message (108) and log debugging information (454) associated with the operation specified by the debug message (108), the debug message (108) including a debug address (412) identifying a communication type and a target location for results of the debugging function, the communication type identifying a mechanism used to communicate the debugging information (454) collected by the plurality of network components (110) to the target location, the debug address identifying the target location based on an Uniform Resource Indicator, the debug message (108) being further inclusive of a header (404) whose function is to invoke tracing and debugging operations at each hop of the signaling pathway; and
communicating the debug message (108) along the signaling pathway to at least one of the network components (110).

2. The method of Claim 1, further comprising:
receiving a message from a network component;
identifying the message as a debug message (108);
identifying the debug address contained in the debug message (108);
processing the debug message (108);
collecting the debugging information (454); and
communicating the debugging information (454) in accordance with the debug address contained in the debug message (108).

3. The method of Claim 1 or Claim 2, wherein:
the debug message (108) is associated with a test and comprises an identifier (414);
the identifier (414) is operable to distinguish the debug message (108) from at least one of other debug messages and other debug messages associated with other tests;
the identifier (414) is different than a call identifier used by a signaling protocol to establish a call in the network (106); and
communicating the identifier (414) along with the debugging information (454) in accordance with the debug address contained in the debug message (108).

4. The method of any of Claims 1-3, wherein the debug message (108) includes:
a source address (406) representing an address associated with a calling party; a destination address (408) representing an address associated with a called party; and
the debug address (412).

5. The method of any of Claims 1-4, wherein the debug message (108) comprises at least one of a Session Initiation Protocol INVITE message, a SIP UPDATE message, a SIP RE-INVITE message, a SIP INFO message, a SIP MESSAGE message, a SIP SUBSCRIBE message, a SIP NOTIFY message, a SIP BYE message, an International Telecommunication Union - Telecommunications fi.323 SETUP message, an H.323 ARQ message, an H.323 UII message, a Bearer Independent Call Control IAM message, a BICC APM message, and a BICC ACM message.

6. The method of Claim 1, further comprising receiving a request to initiate a test of the plurality of network components (110).

7. The device of Claim 6, wherein;
the request comprises a remote request; and
debugging information (454) is logged and communicated to the target location contained in the debug address (412) in response to receiving the remote request.

8. The method of Claim 6, wherein the request comprises a Session Initiation Protocol REFER message, an International Telecommunication Union - Telecommunications H.323 TRANSFER message, and a Bearer Independent Call Control TRANSFER message.

9. The method of Claim 1, wherein the Uniform Resource Indicator comprises at least one of:
an electronic mail address;
a web page address;
a syslog address; and
a file transfer protocol address.

10. The method of Claim 2, wherein processing the debug message (108) comprises:
identifying a next network component (110) in the signaling pathway; and
commnicating the debug message (108) to the next network component (110) in the signaling pathway.

11. The method of Claim 2, wherein the debugging information (454) comprises signaling information used to set up a test call in the network (106).

12. The method of Claim 2, wherein the debugging information (454) comprises the debug message (108) and any information generated when processing the debug message (108).

13. The method of Claim 12, wherein the debugging information (454) comprises information identifying an invocation of an ancillary service during the processing of the debug message (108).

14. The method of Claim 2, wherein the plurality of network components (110) comprise at least one of a source client, a Session Initiation Protocol proxy, and an International Telecommunication Union - Telecommunications H.323 gatekeeper.

15. A device (202) for distributed debugging in a communication network (106), comprising;
a memory (256) operable to store a debug address (412), the debug address (412) identifying a communication type and a target location for results of a debugging function, the communication type identifying a mechanism used to communicate debugging information (454) collected by a plurality of intermediate forwarding network components (110) along a signaling path for a test call between a source client and a destination client to the target location, the debug address (412) identifying a communication type and a target location for results of a debugging function, the target location being based on an Uniform Resource Indicator, a debug message (108) being inclusive of a header (404) whose function is to invoke tracing and debugging operations at each hop of the signaling pathway;
a processor (254) operable to generate the debug message (108), the debug message (108) including the debug address (412) stored in the memory (256), the debug message (108) operable to initiate the debugging function in the plurality of intermediate forwarding network components (110) along the signaling pathway for the test call between the source and the destination client; and
an interface (258) operable to communicate the debug message (108) along the signaling pathway to at least one of the network components (110).

16. The device (202) of Claim 15, comprising:
a processor (254) operable to:
receive a message from a network component (110);
identify the message as a debug message (108);
identify the debug address contained in the debug message (108);
process the debug message (108); and
collect the debugging information (108);
a memory (256) operable to store the debugging information (454) collected by the processor (254); and
an interface (258) operable to communicate the debugging information (454) in accordance with the debug address contained in the debug message (108).

17. The device (202) of Claims 15 or 16, wherein:
the debug message (108) is associated with a test and comprises an identifier (414);
the identifier (414) is operable to distinguish the debug message (108) from at least one of other debug messages and other debug messages associated with other tests;
the identifier (414) is different than a call identifier used by a signalling protocol to establish a call in the network; and
the processor (254) is operable to communicate the identifier (414) along with the debugging information (454) using the interface (258).

18. The device (202) of Claim 15, wherein the debug message (108) comprises:
a source address (406) representing an address associated with a calling party; a destination address (40S) representing an address associated with a called party; and
the debug address (412).

19. The device (202) of Claim 15, wherein the debug message (108) comprises at least one of a Session Initiation Protocol INVITE message, a SIP UPDATE message, a SIP RE-INVITE message, a SIP INFO message, a SIP MESSAGE message, a SIP SUBSCRIBE message, a SIP NOTIFY message, a SIP BYE message, an International Telecommunication Union - Telecommunications H.323 SETUP message, an H.323 ARQ message, an H.323 UH message, a Bearer Independent Call Control IAM message, a BICC APM message, and a BICC ACM message.

20. The device (202) of Claim 15, wherein the processor (254) is further operable to receive a request to initiate a test of the plurality of network components (110).

21. The device (202) of Claim 20, wherein:
the request comprises a remote request; and
the processor (254) is further operable to log debugging information (454) and communicate the debugging information (454) to the target location contained in the debug address (412) in response to receiving the remote request.

22. The device (202) of Claims 20 or 21, wherein the request comprises a Session Initiation Protocol REFER message, an International Telecommunication Union - Telecommunications H.323 TRANSFER message, and a Bearer Independent Call. Control TRANSFER message.

23. The device (202) of Claim 15, wherein the Uniform Resource Indicator comprise at least one of:
an electronic mail address;
a web page address;
a syslog address; and
a file transfer protocol address.

24. The device (202) of Claim 16, wherein the processor (254) is operable to process the debug message (108) by:
identifying a next network component (110) in the pathway between a source of a test call and a destination of a test call; and
communicating the debug message (108) to the next network component (110).

25. The device of Claim 16, wherein the debugging information (454) comprises:
the debug message (108);
signaling information generated when processing the debug message (108); and
information identifying an invocation of an ancillary service during the processing of the debug message.

26. The device (202) of Claim 16, wherein the plurality of network components (110) comprise at least one of a source client, a Session Initiation Protocol proxy, and an International Telecommunication Union - Telecommunications H.323 gatekeeper.

27. The device (202) of Claim 16, wherein the debugging information (454) comprises signalling information used to set up a test call in the network (106).

28. The device (202) of Claim 16, wherein the debugging information (454) comprises the debug message (108) and any information generated when processing the debug message (108).

29. A system (100) for distributed debugging in a communication network, comprising:
a source client (102) operable to generate and communicate a debug message (108) along a signalling pathway to at least one network component, the signalling pathway for test calls between the source client and a destination client, the debug message (108) comprising a debug address identifying a communication type and a target location for results of a debugging function;
a network (106) comprising a plurality of intermediate forwarding network components (110), each network component (110) operable to receive the debug message (108), identify the debug address contained in the debug message (108), collect debugging information (454), and communicate the debugging information (454) in accordance with the debug address contained in the debug message (108); and
the destination client (104) operable to receive the debug message (108) from the network (106), identify the debug address contained in the debug message (108), collect debugging information (454), and communicate the debugging information (454) in accordance with the debug address contained in the debug message (108), wherein the debug message (108) comprises a debug address (412), the debug address (412) identifying a communication type and a target location for results of the debugging function (412), the communication type identifying a mechanism used to communicate debugging information (454) collected by the plurality of network components (110) to the target location along the signalling pathway, the debug address (412) identifying the target location based on an Uniform Resource Indicator, the debug message (108) being further inclusive of a header (404) whose function is to invoke tracing and debugging operations at each hop of a signalling pathway for the associated test call.

30. The system (100) of Claim 29, wherein the debug message (108) further comprises:
a source address (406) representing an address associated with the source client (102);
a destination address (408) representing an address associated with the destination client (104); and
an identifier (414) operable to distinguish the debug message (108) from at least one of other debug messages and other debug messages associated with other tests.

31. The system (100) of Claim 29, wherein the communication type identifies a mechanism used to communicate the debugging information (454) to the target location, the target location comprising at least one of:
an electronic mail address;
a web page address;
a syslog address; and
a file transfer protocol address.

32. The system (100) of Claim 29, further comprising a remote station operable to communicate a remote request over the network, the remote request comprising the debug address and operable to invoke the generation of the debug message (108) at the source client (102), wherein the source client (102) and the network components (110) that receive the remote request are operable to identify the debug address contained in the remote request, collect debugging information (454), and communicate the debugging information (454) in accordance with the debug address contained in the remote request.

33. The system (100) of Claim 29 wherein the destination client (104) is operable to identify a next network component (110) in the signalling pathway, the destination client (104) operable to communicate the debug message (108) to the next network component (110) in the signalling pathway.

## Patentansprüche

1. Verfahren zum verteilten Debuggen (distributed debugging) in einem Kommunikationsnetz (106), das umfasst:
Erzeugen wenigstens einer Debug-Nachricht (108), die so betreibbar ist, dass sie eine Debug-Funktion in einer Vielzahl von Zwischenweiterleitungs-Netzwerkkomponenten (110) entlang eines Signalisierungspfads für einen Testanruf zwischen einem Quellen- und einem Ziel-Client initiiert, wobei die Debug-Funktion so betreibbar ist, dass sie eine von der Debug-Nachricht (108) spezifizierte Operation durchführt und Debug-Informationen (454), die mit der von der Debug-Nachricht (108) spezifizierten Operation assoziiert sind, protokolliert, wobei die Debug-Nachricht (108) eine Debug-Adresse (412) aufweist, die einen Kommunikationstyp und einen Zielort für Ergebnisse der Debug-Funktion identifiziert, wobei der Kommunikationstyp einen Mechanismus identifiziert, der verwendet wird, um die Debug-Informationen (454), die von der Vielzahl von Netzwerkkomponenten (110) erfasst werden, an den Zielort zu kommunizieren, wobei die Debug-Adresse den Zielort basierend auf einem Uniform Resource Indicator identifiziert, wobei die Debug-Nachricht (108) des Weiteren einen Header (404) enthält, dessen Funktion es ist, Überwachungs- und Debug-Operationen bei jedem Hop des Signalisierungspfads aufzurufen; und
Kommunizieren der Debug-Nachricht (108) entlang des Signalisierungspfads an wenigstens eine der Netzwerkkomponenten (110).

2. Verfahren nach Anspruch 1, das des Weiteren umfasst:
Empfangen einer Nachricht von einer Netzwerkkomponente;
Identifizieren der Nachricht als Debug-Nachricht (108);
Identifizieren der in der Debug-Nachricht (108) enthaltenden Debug-Adresse; Verarbeiten der Debug-Nachricht (108);
Erfassen der Debug-Informationen (454); und
Kommunizieren der Debug-Informationen (454) gemäß der in der Debug-Nachricht (108) enthaltenen Debug-Adresse.

3. Verfahren nach Anspruch 1 oder Anspruch 2, wobei:
die Debug-Nachricht (108) mit einem Test assoziiert ist und einen Identifizierer (414) aufweist;
der Identifizierer (414) so betreibbar ist, dass er die Debug-Nachricht (108) von wenigstens einer von anderen Debug-Nachrichten und anderen Debug-Nachrichten, die mit anderen Tests assoziiert sind, unterscheidet;
der Identifizierer (414) unterschiedlich ist von einem Anrufidentifizierer, der von einem Signalisierungsprotokoll verwendet wird, um einen Anruf in dem Netzwerk (106) aufzubauen; und
der Identifizierer (414) zusammen mit den Debug-Informationen (454) gemäß der in der Debug-Nachricht (108) enthaltenen Debug-Adresse kommuniziert wird.

4. Verfahren nach einem der Ansprüche 1 bis 3, wobei die Debug-Nachricht (108) enthält:
eine Quellenadresse (406), die eine mit einer anrufenden Partei assoziierte Adresse repräsentiert;
eine Zieladresse (408), die eine mit einer angerufenen Partei assoziierte Adresse repräsentiert; und
die Debug-Adresse (412).

5. Verfahren nach einem der Ansprüche 1 bis 4, wobei die Debug-Nachricht (108) wenigstens eine einer Session Initiation Protocol INVITE - Nachricht, einer SIP UPDATE - Nachricht, einer SIP RE-INVITE - Nachricht, einer SIP INFO - Nachricht, einer SIP MESSAGE - Nachricht, einer SIP SUBSCRIBE - Nachricht, einer SIP NOTIFY - Nachricht, einer SIP BYE - Nachricht, einer International Telecommunication Union - Telecommunications fi.323 SETUP - Nachricht, einer H.323 ARQ - Nachricht, einer H.323 UII - Nachricht, einer Bearer Independent Call Control IAM - Nachricht, einer BICC APM - Nachricht und einer BICC ACM - Nachricht aufweist.

6. Verfahren nach Anspruch 1, das des Weiteren das Empfangen einer Anfrage zum Initiieren eines Tests der Vielzahl von Netzwerkkomponenten (110) umfasst.

7. Verfahren nach Anspruch 6, wobei:
die Anfrage eine ferne Anfrage umfasst; und
die Debug-Informationen (454) protokolliert und im Ansprechen auf das Empfangen der fernen Anfrage an den in der Debug-Adresse (412) enthaltenen Zielort kommuniziert werden.

8. Verfahren nach Anspruch 6, wobei die Anfrage eine Session Initiation Protocol REFER - Nachricht, eine International Telecommunication Union - Telecommunications H.323 TRANSFER - Nachricht und eine Bearer Independent Call Control TRANSFER - Nachricht umfasst.

9. Verfahren nach Anspruch 1, wobei der Uniform Resource Indicator wenigstens eines von:
elektronischer Mailadresse;
Webpageadresse;
Syslogadresse; und
File Transfer Protocol Adresse
aufweist.

10. Verfahren nach Anspruch 2, wobei das Verarbeiten der Debug-Nachricht (108) umfasst:
Identifizieren einer nächsten Netzwerkkomponente (110) in dem Signalisierungspfad; und
Kommunizieren der Debug-Nachricht (108) an die nächste Netzwerkkomponente (110) in dem Signalisierungspfad.

11. Verfahren nach Anspruch 2, wobei die Debug-Informationen (454) Signalisierungsinformationen umfassen, die verwendet werden, um einen Testanruf in dem Netzwerk (106) zu erstellen.

12. Verfahren nach Anspruch 2, wobei die Debug-Informationen (454) die Debug-Nachricht (108) und alle Informationen umfassen, die beim Verarbeiten der Debug-Nachricht (108) erzeugt werden.

13. Verfahren nach Anspruch 12, wobei die Debug-Informationen (454) Informationen umfassen, die einen Aufruf eines Hilfsdienstes während des Verarbeitens der Debug-Nachricht (108) identifizieren.

14. Verfahren nach Anspruch 2, wobei die Vielzahl von Netzwerkkomponenten (110) wenigstens eines eines Quell-Client, eines Session Initiation Protocol Proxy und eines International Telecommunication Union - Telecommunications H.323 Gatekeeper umfassen.

15. Vorrichtung (202) zum verteilten Debuggen (distributed debugging) in einem Kommunikationsnetzwerk (106), die aufweist:
einen Speicher (256), der so betreibbar ist, dass er eine Debug-Adresse (412) speichert, wobei die Debug-Adresse (412) einen Kommunikationstyp und
einen Zielort für Ergebnisse einer Debug-Funktion identifiziert, wobei der Kommunikationstyp einen Mechanismus identifiziert, der zum Kommunizieren der von einer Vielzahl von Zwischenweiterleitungs-Netzwerkkomponenten (110) erfassten Debugging-Informationen (454) entlang eines Signalisierungspfads für einen Testanruf zwischen einem Quellen-Client und einem Ziel-Client zu dem Zielort verwendet wird, wobei die Debug-Adresse (412) einen Kommunikationstyp und einen Zielort für Ergebnisse einer Debug-Funktion identifiziert, wobei der Zielort auf einem Uniform Resource Indicator basiert, wobei eine Debug-Nachricht (108) einen Header (404) enthält, dessen Funktion es ist, Überwachungs- und Debug-Operationen bei jedem Hop des Signalisierungspfads aufzurufen;
einen Prozessor (254), der so betreibbar ist, dass er die Debug-Nachricht (108) erzeugt, wobei die Debug-Nachricht (108) die in dem Speicher (256) gespeicherte Debug-Adresse (412) enthält, wobei die Debug-Nachricht (108) so betreibbar ist, dass sie die Debug-Funktion in der Vielzahl von Zwischenweiterleitungs-Netzwerkkomponenten (110) entlang des Signalisierungspfads für den Testanruf zwischen dem Quellen- und dem Ziel-Client initiiert; und
eine Schnittstelle (258), die so betreibbar ist, dass sie die Debug-Nachricht (108) entlang des Signalisierungspfads zu wenigstens einer der Netzwerkkomponenten (110) kommuniziert.

16. Vorrichtung (202) nach Anspruch 15, die aufweist:
einen Prozessor (254), der so betreibbar ist, dass er:
eine Nachricht von einer Netzwerkkomponente (110) empfängt;
die Nachricht als Debug-Nachricht (108) identifiziert;
die in der Debug-Nachricht (108) enthaltene Debug-Adresse identifiziert;
die Debug-Nachricht (108) verarbeitet; und
die Debug-Informationen (108) erfasst;
einen Speicher (256), der so betreibbar ist, dass er die von dem Prozessor (254) erfassten Debug-Informationen (454) speichert; und
eine Schnittstelle (258), die so betreibbar ist, dass sie die Debug-Informationen (454) gemäß der in der Debug-Nachricht (108) enthaltenen Debug-Adresse kommuniziert.

17. Vorrichtung (202) nach Anspruch 15 oder 16, wobei:
die Debug-Nachricht (108) mit einem Test assoziiert ist und einen Identifizierer (414) aufweist;
der Identifizierer (414) so betreibbar ist, dass er die Debug-Nachricht (108) von wenigstens einer von anderen Debug-Nachrichten und anderen Debug-Nachrichten, die mit anderen Tests assoziiert sind, unterscheidet;
der Identifizierer (414) unterschiedlich ist von einem Anrufidentifizierer, der von einem Signalisierungsprotokoll verwendet wird, um einen Anruf in dem Netzwerk (106) aufzubauen; und
der Prozessor (254) so betreibbar ist, dass er den Identifizierer (414) zusammen mit den Debug-Informationen (454) mittels der Schnittstelle (258) kommuniziert.

18. Vorrichtung (202) nach Anspruch 15, wobei die Debug-Nachricht (108) aufweist:
eine Quellenadresse (406), die eine mit einer anrufenden Partei assoziierte Adresse repräsentiert;
eine Zieladresse (408), die eine mit einer angerufenen Partei assoziierte Adresse repräsentiert; und
die Debug-Adresse (412).

19. Vorrichtung (202) nach Anspruch 15, wobei die Debug-Nachricht (108) wenigstens eine einer Session Initiation Protocol INVITE - Nachricht, einer SIP UPDATE - Nachricht, einer SIP RE-INVITE - Nachricht, einer SIP INFO - Nachricht, einer SIP MESSAGE - Nachricht, einer SIP SUBSCRIBE ― Nachricht, einer SIP NOTIFY - Nachricht, einer SIP BYE - Nachricht, einer International Telecommunication Union - Telecommunications H.323 SETUP - Nachricht, einer H.323 ARQ - Nachricht, einer H.323 UH - Nachricht, einer Bearer Independent Call Control IAM - Nachricht, einer BICC APM - Nachricht und einer BICC ACM - Nachricht aufweist.

20. Vorrichtung (202) nach Anspruch 15, wobei der Prozessor (254) des Weiteren so betreibbar ist, dass er eine Anfrage zum Initiieren eines Tests der Vielzahl von Netzwerkkomponenten (110) empfängt.

21. Vorrichtung (202) nach Anspruch 20, wobei:
die Anfrage eine ferne Anfrage umfasst; und
der Prozessor (254) des Weiteren so betreibbar ist, dass er Debug-Informationen (454) protokolliert und die Debug-Informationen (454) im Ansprechen auf das Empfangen der fernen Anfrage an den in der Debug-Adresse (412) enthaltenen Zielort kommuniziert.

22. Vorrichtung (202) nach den Ansprüchen 20 oder 21, wobei die Anfrage eine Session Initiation Protocol REFER - Nachricht, eine International Telecommunication Union - Telecommunications H.323 TRANSFER - Nachricht und eine Bearer Independent Call Control TRANSFER - Nachricht umfasst.

23. Vorrichtung (202) nach Anspruch 15, wobei der Uniform Resource Indicator wenigstens eines von:
elektronischer Mailadresse;
Webpageadresse;
Syslogadresse; und
File Transfer Protocol Adresse
aufweist.

24. Vorrichtung (202) nach Anspruch 16, wobei der Prozessor (254) so betreibbar ist, dass er die Debug-Nachricht (108) verarbeitet durch:
Identifizieren einer nächsten Netzwerkkomponente (110) in dem Pfad zwischen einer Quelle eines Testanrufs und einem Ziel eines Testanrufs; und
Kommunizieren der Debug-Nachricht (108) an die nächste Netzwerkkomponente (110).

25. Vorrichtung nach Anspruch 16, wobei die Debug-Informationen (454) aufweisen:
die Debug-Nachricht (108);
Signalisierungsinformationen, die bei der Verarbeitung der Debug-Nachricht (108) erzeugt werden; und
Informationen, die einen Aufruf eines Hilfsdienstes während des Verarbeitens der Debug-Nachricht identifizieren.

26. Vorrichtung (202) nach Anspruch 16, wobei die Vielzahl von Netzwerkkomponenten (110) wenigstens eines eines Quellen-Client, eines Session Initiation Protocol Proxy und eines International Telecommunication Union - Telecommunications H.323 Gatekeeper umfassen.

27. Vorrichtung (202) nach Anspruch 16, wobei die Debug-Informationen (454) Signalisierungsinformationen umfassen, die verwendet werden, um einen Testanruf in dem Netzwerk (106) aufzubauen.

28. Vorrichtung (202) nach Anspruch 16, wobei die Debug-Informationen (454) die Debug-Nachricht (108) und alle Informationen enthalten, die beim Verarbeiten der Debug-Nachricht (108) erzeugt werden.

29. System (100) zum verteilten Debuggen (distributed debugging) in einem Kommunikationsnetz, das aufweist:
einen Quellen-Client (102), der so betreibbar ist, dass er eine Debug-Nachricht (108) erzeugt und entlang eines Signalisierungspfads zu wenigstens einer Netzwerkkomponente kommuniziert, wobei der Signalisierungspfad für Testanrufe zwischen dem Quellen-Client und einem Ziel-Client besteht, wobei die Debug-Nachricht (108) eine Debug-Adresse enthält, die einen Kommunikationstyp und einen Zielort für Ergebnisse einer Debug-Funktion identifiziert;
ein Netzwerk (106), das eine Vielzahl von Zwischenweiterleitungs-Netzwerkkomponenten (110) aufweist, wobei jede Netzwerkkomponente (110) so betreibbar ist, dass sie die Debug-Nachricht (108) empfängt, die in der Debug-Nachricht (108) enthaltene Debug-Adresse identifiziert, Debug-Informationen (454) erfasst und die Debug-Informationen (454) gemäß der in der Debug-Nachricht (108) enthaltenen Debug-Adresse kommuniziert; und
den Ziel-Client (104), der so betreibbar ist, dass er die Debug-Nachricht (108) von dem Netzwerk (106) empfängt, die in der Debug-Nachricht (108) enthaltene Debug-Adresse identifiziert, Debug-Informationen (454) erfasst und
die Debug-Informationen (454) gemäß der in der Debug-Nachricht (108) enthaltenen Debug-Adresse kommuniziert, wobei die Debug-Nachricht (108) eine Debug-Adresse (412) enthält, wobei die Debug-Adresse (412) einen Kommunikationstyp und einen Zielort für Ergebnisse der Debug-Funktion (412) identifiziert, wobei der Kommunikationstyp einen Mechanismus identifiziert, der zum Kommunizieren der von der Vielzahl von Netzwerkkomponenten (110) erfassten Debug-Informationen (454) zu dem Zielort entlang dem Signalisierungspfad verwendet wird, wobei die Debug-Adresse (412) den Zielort basierend auf einem Uniform Resource Indicator identifiziert, wobei
die Debug-Nachricht (108) des Weiteren einen Header (404) enthält, dessen Funktion es ist, Überwachungs- und Debug-Operationen bei jedem Hop eines Signalisierungspfads für den assoziierten Testanruf aufzurufen.

30. System (100) nach Anspruch 29, wobei die Debug-Nachricht (108) des Weiteren aufweist:
eine Quellen-Adresse (406), die eine mit dem Quellen-Client (102) assoziierte Adresse repräsentiert;
eine Ziel-Adresse (408), die eine mit dem Ziel-Client (104) assoziierte Adresse repräsentiert; und
einen Identifizieren (414), der so betreibbar ist, dass er die Debug-Nachricht (108) von wenigstens einer von anderen Debug-Nachrichten und anderen mit anderen Tests assoziierten Debug-Nachrichten unterscheidet.

31. System (100) nach Anspruch 29, wobei der Kommunikationstyp einen Mechanismus identifiziert, der zum Kommunizieren der Debug-Informationen (454) an den Zielort verwendet wird, wobei der Zielort wenigstens eines von:
elektronischer Mailadresse;
Webpageadresse;
Syslogadresse; und
File Transfer Protocol Adresse
aufweist.

32. System (100) nach Anspruch 29, das des Weiteren eine ferne Station aufweist, die so betreibbar ist, dass sie eine ferne Anfrage über das Netzwerk kommuniziert, wobei die ferne Anfrage die Debug-Adresse enthält und so betreibbar ist, dass sie die Erzeugung der Debug-Nachricht (108) an dem Quellen-Client (102) aufruft, wobei der Quellen-Client (102) und die Netzwerkkomponenten (110), die die ferne Anfrage empfangen, so betreibbar sind, dass sie die in der fernen Anfrage enthaltene Debug-Adresse identifizieren, Debug-Informationen (454) erfassen und die Debug-Informationen (454) gemäß der in der fernen Anfrage enthaltenen Debug-Adresse kommunizieren.

33. System (100) nach Anspruch 29, wobei der Ziel-Client (104) so betreibbar ist, dass er eine nächste Netzwerkkomponente (110) in dem Signalisierungspfad identifiziert, wobei der Ziel-Client (104) so betreibbar ist, dass er die Debug-Nachricht (108) an die nächste Netzwerkkomponente (110) in dem Signalisierungspfad kommuniziert.

## Revendications

1. Procédé de diagnostic distribué dans un réseau de communication (106), comprenant les étapes consistant à :
générer au moins un message de diagnostic (108) utilisable pour initier une fonction de diagnostic dans une pluralité de composants de réseau de transfert intermédiaire (110) le long d'un chemin de signalisation pour un appel de test entre un client de source et un client de destination, la fonction de diagnostic étant utilisable pour effectuer une opération spécifiée par le message de diagnostic (108) et enregistrer des informations de diagnostic (454) associées à l'opération spécifiée par le message de diagnostic (108), le message de diagnostic (108) comprenant une adresse de diagnostic (412) identifiant un type de communication et un emplacement cible pour des résultats de la fonction de diagnostic, le type de communication identifiant un mécanisme utilisé pour communiquer les informations de diagnostic (454) recueillies par la pluralité de composants de réseau (110) à l'emplacement cible, l'adresse de diagnostic identifiant l'emplacement cible sur la base d'un identifiant de ressource uniforme, le message de diagnostic (108) comprenant en outre un en-tête (404) dont la fonction est d'invoquer des opérations de traçage et de diagnostic à chaque saut du chemin de signalisation ; et
communiquer le message de diagnostic (108) le long du chemin de signalisation à au moins l'un des composants de réseau (110).

2. Procédé selon la revendication 1, comprenant en outre les étapes consistant à :
recevoir un message d'un composant d'un réseau ;
identifier le message en tant que message de diagnostic (108) ;
identifier l'adresse de diagnostic contenue dans le message de diagnostic (108) ;
traiter le message de diagnostic (108) ;
recueillir les informations de diagnostic (454) ; et
communiquer les informations de diagnostic (454) selon l'adresse de diagnostic contenue dans le message de diagnostic (108).

3. Procédé selon la revendication 1 ou 2, dans lequel :
le message de diagnostic (108) est associé à un test et comprend un identifiant (414) ;
l'identifiant (414) est utilisable pour distinguer le message de diagnostic (108) d'au moins l'un d'autres messages de diagnostic et d'autres messages de diagnostic associés à d'autres tests ;
l'identifiant (414) est différent d'un identifiant d'appel utilisé par un protocole de signalisation pour établir un appel dans le réseau (106) ; et
communiquer l'identifiant (414) avec les informations de diagnostic (454) selon l'adresse de diagnostic contenue dans le message de diagnostic (108).

4. Procédé selon l'une quelconque des revendications 1 à 3, dans lequel le message de diagnostic (108) comprend :
une adresse de source (406) représentant une adresse associée à un appelant ; une adresse de destination (408) représentant une adresse associée à un appelé ; et
l'adresse de diagnostic (412).

5. Procédé selon l'une quelconque des revendications 1 à 4, dans lequel le message de diagnostic (108) comprend au moins l'un d'un message Session Initiation Protocol INVITE, d'un message SIP UPDATE, d'un message SIP RE-INVITE, d'un message SIP INFO, d'un message SIP MESSAGE, d'un message SIP SUBSCRIBE, d'un message SIP NOTIFY, d'un message SIP BYE, d'un message International Telecommunication Union - Telecommunications fi.323 SETUP, d'un message H.323 ARQ, d'un message H.323 UII, d'un message Bearer Independent Call Control IAM, d'un message BICC APM et d'un message BICC ACM.

6. Procédé selon la revendication 1, comprenant en outre l'étape consistant à recevoir une requête pour initier un test de la pluralité de composants de réseau (110).

7. Procédé selon la revendication 6, dans lequel :
la requête comprend une requête distante ; et
les informations de diagnostic (454) sont enregistrées et communiquées à l'emplacement cible contenu dans l'adresse de diagnostic (412) en réponse à la réception de la requête distante.

8. Procédé selon la revendication 6, dans lequel la requête comprend un message Session Initiation Protocol REFER, un message International Telecommunication Union - Telecommunications H.323 TRANSFER et un message Bearer Independent Call Control TRANSFER.

9. Procédé selon la revendication 1, dans lequel l'indicateur de ressource uniforme comprend au moins l'une de :
une adresse de courrier électronique ;
une adresse de page Web ;
une adresse syslog ; et
une adresse de protocole de transfert de fichier.

10. Procédé selon la revendication 2, dans lequel le traitement du message de diagnostic (108) comprend les étapes consistant à :
identifier un composant de réseau suivant (110) dans le chemin de signalisation ; et
communiquer le message de diagnostic (108) au composant de réseau suivant (110) dans le chemin de signalisation.

11. Procédé selon la revendication 2, dans lequel les informations de diagnostic (454) comprennent des informations de signalisation utilisées pour établir un appel de test dans le réseau (106).

12. Procédé selon la revendication 2, dans lequel les informations de diagnostic (454) comprennent le message de diagnostic (108) et des informations générées lors du traitement du message de diagnostic (108).

13. Procédé selon la revendication 12, dans lequel les informations de diagnostic (454) comprennent des informations identifiant une invocation d'un service auxiliaire pendant le traitement du message de diagnostic (108).

14. Procédé selon la revendication 2, dans lequel la pluralité de composants de réseau (110) comprennent au moins l'un d'un client de source, d'un proxy Session Initiation Protocol, et d'un garde-barrière International Telecommunication Union Telecommunications H.323.

15. Dispositif (202) de diagnostic distribué dans un réseau de communication (106), comprenant :
une mémoire (256) utilisable pour stocker une adresse de diagnostic (412), l'adresse de diagnostic (412) identifiant un type de communication et un emplacement cible pour des résultats d'une fonction de diagnostic, le type de communication identifiant un mécanisme utilisé pour communiquer des informations de diagnostic (454) recueillies par une pluralité de composants de réseau de transfert intermédiaire (110) le long d'un chemin de signalisation pour un appel de test entre un client de source et un client de destination à l'emplacement cible, l'adresse de diagnostic (412) identifiant un type de communication et un emplacement cible pour des résultats d'une fonction de diagnostic, l'emplacement cible étant basé sur un indicateur de ressource uniforme, un message de diagnostic (108) comprenant un en-tête (404) dont la fonction est d'invoquer des opérations de traçage et de diagnostic à chaque saut du chemin de signalisation,
un processeur (254) utilisable pour générer le message de diagnostic (108), le message de diagnostic (108) comprenant l'adresse de diagnostic (412) stockée dans la mémoire (256), le message de diagnostic (108) étant utilisable pour initier la fonction de diagnostic dans la pluralité de composants de réseau de transfert intermédiaire (110) le long du chemin de signalisation pour l'appel de test entre le client de source et le client de destination ; et
une interface (258) utilisable pour communiquer le message de diagnostic (108) le long du chemin de signalisation à au moins l'un des composants de réseau (110).

16. Dispositif (202) selon la revendication 15, comprenant :
un processeur (254) utilisable pour :
recevoir un message d'un composant de réseau (110) ;
identifier le message en tant que message de diagnostic (108) ;
identifier l'adresse de diagnostic contenue dans le message de diagnostic (108) ;
traiter le message de diagnostic (108) ; et
recueillir les informations de diagnostic (108) ;
une mémoire (256) utilisable pour stocker les informations de diagnostic (454) recueillies par le processeur (254) ; et
une interface (258) utilisable pour communiquer les informations de diagnostic (454) selon l'adresse de diagnostic contenue dans le message de diagnostic (108).

17. Dispositif (202) selon la revendication 15 ou 16, dans lequel :
le message de diagnostic (108) est associé à un test et comprend un identifiant (414) ;
l'identifiant (414) est utilisable pour distinguer le message de diagnostic (108) d'au moins l'un d'autres messages de diagnostic et d'autres messages de diagnostic associés à d'autres tests ;
l'identifiant (414) est différent d'un identifiant d'appel utilisé par un protocole de signalisation pour établir un appel dans le réseau ; et
le processeur (254) est utilisable pour communiquer l'identifiant (414) avec les informations de diagnostic (454) en utilisant l'interface (258).

18. Dispositif (202) selon la revendication 15, dans lequel le message de diagnostic (108) comprend :
une adresse de source (406) représentant une adresse associée à un appelant ; une adresse de destination (408) représentant une adresse associée à un appelé ; et
l'adresse de diagnostic (412).

19. Dispositif (202) selon la revendication 15, dans lequel le message de diagnostic (108) comprend au moins l'un d'un message Session Initiation Protocol INVITE, d'un message SIP UPDATE, d'un message SIP RE-INVITE, d'un message SIP INFO, d'un message SIP MESSAGE, d'un message SIP SUBSCRIBE, d'un message SIP NOTIFY, d'un message SIP BYE, d'un message International Telecommunication Union - Telecommunications H.323 SETUP, d'un message H.323 ARQ, d'un message H.323 UH, d'un message Bearer Independent Call Control IAM, d'un message BICC APM et d'un message BICC ACM.

20. Dispositif (202) selon la revendication 15, dans lequel le processeur (254) est en outre utilisable pour recevoir une requête pour initier un test de la pluralité de composants de réseau (110).

21. Dispositif (202) selon la revendication 20, dans lequel :
la requête comprend une requête distante ; et
le processeur (254) est en outre utilisable pour enregistrer les informations de diagnostic (454) et communiquer les informations de diagnostic (454) à l'emplacement cible contenu dans l'adresse de diagnostic (412) en réponse à la réception de la requête distante.

22. Dispositif (202) selon la revendication 20 ou 21, dans lequel la requête comprend un message Session Initiation Protocol REFER, un message International Telecommunication Union - Telecommunications H.323 TRANSFER et un message Bearer Independent Call Control TRANSFER.

23. Dispositif (202) selon la revendication 15, dans lequel l'indicateur de ressource uniforme comprend au moins l'une de :
une adresse de courrier électronique ;
une adresse de page Web ;
une adresse syslog ; et
une adresse de protocole de transfert de fichier.

24. Dispositif (202) selon la revendication 16, dans lequel le processeur (254) est utilisable pour traiter le message de diagnostic (108) en :
identifiant un composant de réseau suivant (110) dans le chemin de signalisation entre une source d'un appel de test et une destination d'un appel de test ; et
communiquant le message de diagnostic (108) au composant de réseau suivant (110).

25. Dispositif selon la revendication 16, dans lequel les informations de diagnostic (454) comprennent :
le message de diagnostic (108) ;
des informations de signalisation générées pendant le traitement du message de diagnostic (108) ;
des informations identifiant une invocation d'un service auxiliaire pendant le traitement du message de diagnostic.

26. Dispositif (202) selon la revendication 16, dans lequel la pluralité de composants de réseau (110) comprennent au moins l'un d'un client de source, d'un proxy Session Initiation Protocol, et d'un garde-barrière International Telecommunication Union - Telecommunications H.323.

27. Dispositif (202) selon la revendication 16, dans lequel les informations de diagnostic (454) comprennent des informations de signalisation utilisées pour établir un appel de test dans le réseau (106).

28. Dispositif (202) selon la revendication 16, dans lequel les informations de diagnostic (454) comprennent le message de diagnostic (108) et des informations générées lors du traitement du message de diagnostic (108).

29. Système (100) de diagnostic distribué dans un réseau de communication, comprenant :
un client de source (102) utilisable pour générer et communiquer un message de diagnostic (108) le long d'un chemin de signalisation à au moins un composant de réseau, le chemin de signalisation servant à des appels de test entre le client de source et un client de destination, le message de diagnostic (108) comprenant une adresse de diagnostic identifiant un type de communication et un emplacement cible pour des résultats d'une fonction de diagnostic ;
un réseau (106) comprenant une pluralité de composants de réseau de transfert intermédiaire (110), chaque composant de réseau (110) étant utilisable pour recevoir le message de diagnostic (108), identifier l'adresse de diagnostic contenue dans le message de diagnostic (108), recueillir des informations de diagnostic (454), et communiquer les informations de diagnostic (454) selon l'adresse de diagnostic contenue dans le message de diagnostic (108) ; et
le client de destination (104) étant utilisable pour recevoir le message de diagnostic (108) du réseau (106), identifier l'adresse de diagnostic contenue dans le message de diagnostic (108), recueillir des informations de diagnostic (454), et communiquer les informations de diagnostic (454) selon l'adresse de diagnostic contenue dans le message de diagnostic (108), dans lequel le message de diagnostic (108) comprend une adresse de diagnostic (412), l'adresse de diagnostic (412) identifiant un type de communication et un emplacement cible pour des résultats de la fonction de diagnostic (412), le type de communication identifiant un mécanisme utilisé pour communiquer des informations de diagnostic (454) recueillies par la pluralité de composants de réseau (110) à l'emplacement cible le long du chemin de signalisation, l'adresse de diagnostic (412) identifiant l'emplacement cible sur la base d'un indicateur de ressource uniforme, le message de diagnostic (108) comprenant en outre un en-tête (404) dont la fonction est d'invoquer des opérations de traçage et de diagnostic à chaque saut d'un chemin de signalisation pour l'appel de test associé.

30. Système (100) selon la revendication 29, dans lequel le message de diagnostic (108) comprend en outre :
une adresse de source (406) représentant une adresse associée au client de source (102) ;
une adresse de destination (408) représentant une adresse associée au client de destination (104) ; et
un identifiant (414) utilisable pour distinguer le message de diagnostic (108) d'au moins l'un d'autres messages de diagnostic et d'autres messages de diagnostic associés à d'autres tests.

31. Système (100) selon la revendication 29, dans lequel le type de communication identifie un mécanisme utilisé pour communiquer les informations de diagnostic (454) à l'emplacement cible, l'emplacement cible comprenant au moins l'un de :
une adresse de courrier électronique ;
une adresse de page Web ;
une adresse syslog ; et
une adresse de protocole de transfert de fichier.

32. Système (100) selon la revendication 29, comprenant en outre une station distante utilisable pour communiquer une requête distante sur le réseau, la requête distante comprenant l'adresse de diagnostic et utilisable pour invoquer la génération du message de diagnostic (108) au client de source (102), dans lequel le client de source (102) et les composants de réseau (110) qui reçoivent la requête distante sont utilisables pour identifier l'adresse de diagnostic contenue dans la requête distante, recueillir des informations de diagnostic (454), et communiquer les informations de diagnostic (454) selon l'adresse de diagnostic contenue dans la requête distante.

33. Système (100) selon la revendication 29, dans lequel le client de destination (104) est utilisable pour identifier un composant de réseau suivant (110) dans le chemin de signalisation, le client de destination (104) étant utilisable pour communiquer le message de diagnostic (108) au composant de réseau suivant (110) dans le chemin de signalisation.
